(19) **Europäisches Patentamt**

**European Patent Office**

**Office européen des brevets**

(11) Publication number : **0 663 594 A1**

(12) # EUROPEAN PATENT APPLICATION

(21) Application number : **94309323.7**

(22) Date of filing : **14.12.94**

(51) Int. Cl.⁶ : **G01N 33/00**

(30) Priority : **18.12.93 GB 9325916**

(43) Date of publication of application :
**19.07.95 Bulletin 95/29**

(84) Designated Contracting States :
**DE FR GB IT**

(71) Applicant : **SEM Corporation**
**1300 Shames Drive**
**Westbury, NY 11590 (US)**

(72) Inventor : **Capetanopoulos, Constantine Dean**
**9 Price Street**
**Dobbs Ferry, NY 10522 (US)**

(74) Representative : **Wishart, Ian Carmichael**
**Bagpuize House, Baker Street**
**Aston Tirrold, Oxfordshire OX11 9DD (GB)**

(54) **Improvements in gas sensors.**

(57) A device incorporating a gas sensor (4) has gas diffusion barriers (A) and (B), one of which may be closed by a valve (12). The signal from the sensor is recorded at first and second times after closing the valve, and a value for the concentration of an active gas is calculated from the signals and time difference.

FIG.3

EP 0 663 594 A1

## BACKGROUND OF THE INVENTION

This invention concerns improvements in gas sensors, and a method for determining the level of an active gas in a gas mixture.

US Patent No 4,829,809 describes an electrochemical gas sensor device incorporating a sealable chamber of known volume for a gas comprising an unknown quantity of an active gas. By sealing the chamber and then measuring the sensor output at two times, it is possible to calculate the concentration of the active gas, and to calculate therefrom the sensitivity of the sensor. This technique can operate with a variety of sensors specific for different active gases, characteristic of which is carbon monoxide. The teaching of USP 4,829,809 is incorporated herein by reference.

The use of electrochemical sensors for determining levels of CO in flue gases from boilers is now well established in control systems for assessing the boiler efficiency and hence improving overall combustion efficiency. There are periods of boiler operation, however, such as during start-up when boiler tuning is significantly deviated from optimum, or when a regulation requires periodic measurements upstream of a flue gas conditioning unit in order to check its operational efficiency, in which the concentration of CO is very much higher than normal. Under such conditions, the electrochemical sensor can be swamped or saturated with active gas and will produce signals that are non-linear, leading to inaccurate readings.

US Patent 5,092,980 describes a modified electrochemical cell having a diffusion barrier of variable area, to give the sensor an increased operational range. This operates by altering the sensitivity of the sensor in order to give different output signal slopes with gas concentration, by operating valves to change the area of a diffusion barrier in the event of an overload of the sensor, detected by a comparator comparing sensor output with a predetermined limit value.

## SUMMARY OF THE INVENTION

The present invention aims to provide an electrochemical sensor device capable of determining levels of active gas in a gas mixture by the use of valve means but operating in a fundamentally different way to the device disclosed in USP 5,092,980.

It will be realised that a gas sensor which produces a signal proportional to the rate of reaction of an active gas, reflects a situation in which active gas is being consumed by the reaction. The invention disclosed in USP 4,829,809 uses a chamber of volume of 1 to 200 $cm^3$, eg about 12 $cm^3$, and teaches that this volume must be closed off to the gas mixture before measurements are taken. It has unexpectedly been found that similar calculations to those disclosed in said USP can give values for concentration which are of practical use, simply by closing or partially closing access of gas into the sensor through a diffusion barrier. We have thus realised that the sensor sensing element "sees" a constant concentration of active gas internally, and if the supply of gas is restricted or terminated, the sensing element will continue to consume the tiny quantity of gas held within the sensor, and produce a declining output signal. It is also significant that the present invention operates successfully in some embodiments which still have an open, albeit restricted, gas diffusion barrier.

Accordingly, the present invention provides a device for determining the concentration of an active gas in a gas mixture, comprising a gas sensor which consumes active gas by reaction at a sensing element and which produces an output signal proportional to the rate of reaction of active gas, said sensor having a gas diffusion barrier means between the gas mixture and the sensing element, valve means actuatable to close or restrict said gas diffusion barrier means, means for recording a first output signal from the sensor at a first time subsequent to the closing or restricting of said gas diffusion barrier means, means for recording a second output signal at a time subsequent to said first time, and means for processing said first and second output signals with the time interval between said first and second times, to calculate a value for active gas concentration.

A particularly useful type of gas sensor for use in the present invention is a galvanic electrochemical cell, and the majority of the description hereinafter shall refer to such cells. However, there exist other gas sensors which may be used, such as a pellistor which measures the concentration of a flammable gas by the exothermic reaction of the flammable gas with oxygen on a catalytic bead.

A particularly preferred embodiment of the present invention is accordingly a device for determining the concentration of an active gas in a gas mixture, comprising a galvanic electrochemical cell having a sensing electrode and capable of producing an output signal proportional to the rate of reaction of the active gas at the sensing electrode, which cell incorporates at least first gas diffusion barrier means and optionally second gas diffusion barrier means (in which case said first gas diffusion barrier means has a lower resistance to flow of gas to the sensing electrode than said second gas diffusion barrier means), valve means for closing or restricting said first gas diffusion barrier means, means for recording a first output signal from the sensor at a first time subsequent to the closing of the valve means, and for recording a second output at a second time subsequent to said first time, and means for processing the said first and second output signals with the time interval between said first and second times to calculate a value for active gas concentration.

The gas diffusion barrier means are suitably capillaries, or orifices, of different diameters, although the sensor designer may choose other types of gas diffusion barriers such as described in Chapter 6 of "Techniques and Mechanisms in Gas Sensing", Ed. P T Moseley et al, including multiporous barriers and solid membranes (this chapter is a particularly useful chapter describing electrochemical sensor cells). There may, for example, be a first gas diffusion barrier means comprising a plurality of capillaries or orifices, with a second gas diffusion barrier means comprising a single gas entry in the form of a capillary or orifice. Other possible arrangements include using a single capillary as the first gas diffusion barrier and multiple capillaries as the second gas diffusion barrier, or using single capillaries for both first and second gas diffusion barriers, or using multiple capillaries (not necessarily the same number) for both first and second gas diffusion barriers. Especially in the case of a single capillary, it is relatively straightforward to incorporate a valve seat in the mouth of the capillary. Alternatively, a valve member may contact and seal the mouth of the capillary. In the case of multiporous barriers or other extended surface area diffusion barriers, a valve means may cover and seal part only of the barrier, which is equivalent to closing first barrier means and leaving second barrier means free for passage of gas.

The sensor cell itself is of a type that is known in the art.

The valve is conveniently a plunger or piston mating with the valve seat, and actuated by a piston rod arrangement operated by a solenoid, although any other means which gives consistent and reliable operation such as pneumatic pressure or micro-motor may be used. Valve means other than a piston or plunger that may be used include disc valves or sliding valves.

The actuation of the valve means may be manual, for example by a button or lever, or may be initiated by a control means at pre-determined times (to check sensor sensitivity, for example).

The invention further provides a method for determining the level of an active gas in a gas mixture, comprising the steps of:

(a) passing the gas over a sensor such as a galvanic electrochemical gas sensor having a sensing element electrode capable of producing an output signal proportional to the rate of reaction of said active gas at said sensing element, said sensor having gas diffusion barrier means, for example first and second gas diffusion barriers, said first gas diffusion barrier having a lower resistance to flow of gas to the sensing electrode than said second gas diffusion barrier,

(b) closing or restricting said gas diffusion barrier means to prevent or restrict gas flow therethrough,

(c) recording a first output signal from the sensor at a time subsequent to step (b),

(d) recording a second output signal from the sensor at a time subsequent to step (c), and

(e) processing the output signals and the time interval between steps (c) and (d) to calculate a value for the concentration of active gas.

It has been found that one of the several equations described in USP 4,829,809 is particularly useful to permit the calculation required in the use of the present invention. In particular, and starting from a gas of known composition, the equation:

$$C_o = \frac{S_t}{S_{2t}} \times S_t \times \frac{t}{A} \times \ln \frac{S_t}{S_{2t}}$$

in which

$C_o$    is the concentration of active gas (usually in ppm)

$S_t$    is the cell output signal at a first time, in uA,

$S_{2t}$    is the cell output signal at a second time, in uA,

$t$    is the time difference between the first and second times, in seconds, and

$A$    is a constant of the device at constant temperature and pressure, for a given gas (the units for A will depend upon the units chosen for the other measurands)

enables a value for A to be determined. In turn, a predetermined value for A for a particular device may be used with the above equation to allow the calculation of a concentration with the simplest of measurements of two sensor output signals and a time difference. Two measurements have been found to give sufficient accuracy for most practical purposes. If greater accuracy is required, however, it is possible to record many more than two sensor output signals and times, and to improve the accuracy of the calculation by statistical techniques.

The calculation may be done manually, using a calculator, or more preferably using a dedicated microprocessor, or the microprocessor which is part of a controller/processor as may be found in a boiler efficiency monitor and controller.

The invention may find utility in safety applications, where in general there is little or no active gas present, and the sensor is present to initiate an alarm or other signal upon the appearance of the active gas at higher than permitted or desired levels, or in emission and control. It has particular utility in the measurement of CO in flue gases, it is by no means limited thereto, and may be used for the accurate determination of active gases such as may be contained in gas cylinders, or generated chemically or by electrochemical means. Gas cylinders frequently contain a mixture of an active gas with an inert gas, and experience has shown that the nominal gas composition may be inaccurate by up to about 10% because of reaction of the active gas and/or the difficulties of blending accurately, and inaccuracies are more often seen at low volumetric concentrations.

The invention will now be described with reference to the accompanying drawings, in which

Fig 1 is a top view of a gas sensor component,

Fig 2 is a top view of an alternative gas sensor component,

Fig 3 is a sectional side view of a gas sensor device according to the invention, and

Fig 4 is a trace of a sensor output signal.

## DESCRIPTION OF PREFERRED EMBODIMENT

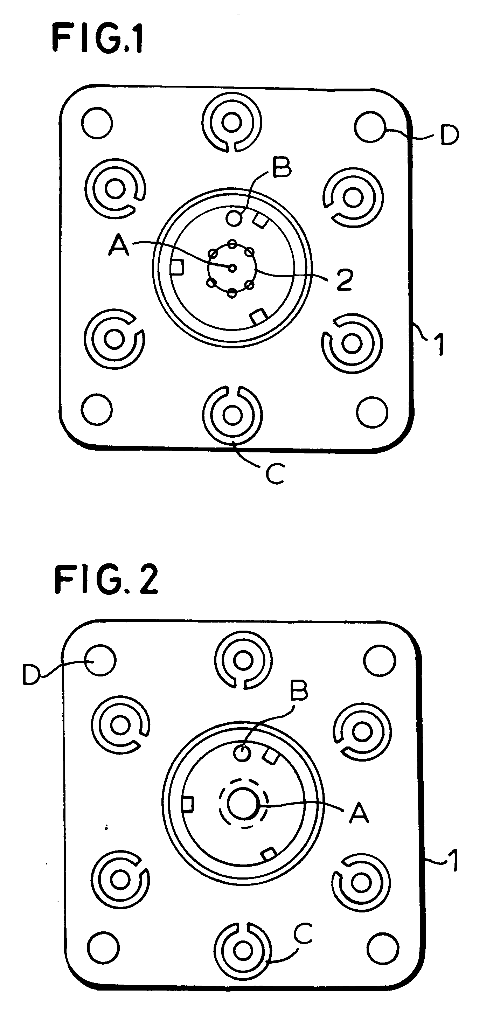

Referring to the gas sensor component shown in Fig 1, this is in the form of a plastics top plate, 1, which acts as a top plate of an electrochemical gas sensor, for example as manufactured by City Technology Ltd, of Portsmouth, England. (The normal top plate of a gas sensor incorporates a gas diffusion barrier in the form of a capillary (or may contain several capillaries depending upon the particular sensor), and is mounted directly in contact with a diffusion membrane which separates gas from liquid electrolyte.) According to the invention, plate 1 has a central area 2, incorporating a set of capillaries A, having a central capillary and six surrounding capillaries, together forming the first gas diffusion barrier. Offset in the central area is a further capillary, B, forming the second gas diffusion barrier. In the particular embodiment shown, each capillary A has a diameter of 0.9 mm, and the capillary B has a diameter of 1.35 mm. In plate 1, holes C are used to secure the plate together with the other components of the electrochemical cell, and holes D are used to mount the cell in a desired position. The plate 1 as shown has been tested with an NO sensor.

The alternative component, shown in Fig 2, is of the same general description as that of Fig 1, and identical reference numerals are used for identical parts. In this instance, a single central capillary A is used, and the diameters, in mm, of both capillaries A and B are given below for different gases (for which different gas sensors, themselves having different characteristics, must be used):

| Gas | Capillary A | Capillary B |
|-----|-------------|-------------|
| $SO_2$ | 3.9 | 1.2 |
| $NO_2$ | 5.3 | 2.0 |
| CO | 0.81 | 0.326 |

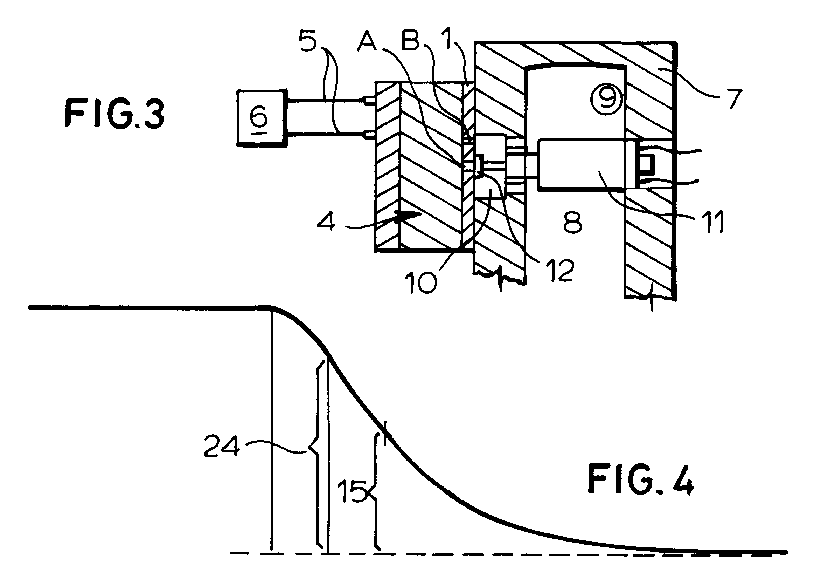

Referring now to Fig 3, the plate 1 is mounted onto a gas sensor, 4, shown schematically, having output leads, 5. The leads 5 are connected to a signal processor, 6, suitably a commercial microprocessor. The signal processor may communicate with a display unit (not shown) or retain signal values and calculated concentrations for later access by a user.

The sensor cell and plate 1 are mounted in a gas flow housing, 7, for conveying gas samples to the sensor. The housing has a main gas flow channel, 8, and a gas exit, 9, and a gas sampling space, 10, communicates with the main channel 8. Also mounted in the housing 7 is a solenoid device, 11, having a plunger carrying a valve member, 12, made of stainless steel, although other materials which are inert under the conditions of use may be used, and these may be Ni-plated steel, PTFE or the like. The solenoid is shown in a position in which the valve member contacts the central area of plate 1 and closes off the first gas diffusion barrier.

The device as described was assessed using a reference gas of 187 ppm of CO in air. The output from the sensor cell was constant. The solenoid was activated and the valve member sealed off the first gas diffusion barrier, at which time the sensor signal began to decay towards another constant signal, as shown in Fig 4. Signals were recorded at two times, and the signals and time differences were processed using the equation given above, to give a value for A of 1.463.

The device was then tested against another gas, of nominal 2000 ppm CO in $N_2$, in the same manner. It was observed that the output signal from the sensor cell decayed in the same way, and that the slope of the curve was identical. Utilising the value of A previously calculated, in the said equation, a concentration of 1969 ppm was calculated.

In general, the device of the invention is calibrated upon installation using a standard gas. It may be arranged to self check its sensitivity during operation using standard gases, or even a flue gas of unknown providing that actuation of the valve means is not effected until the sensor output signal has been constant for a significant time such as several minutes.

A particular use envisaged is in association with combustion monitoring, especially where a flue gas conditioning unit is fitted, which acts to reduce regulated emmissions. A CO or other monitor may be fitted downstream of the conditioning unit, and comprises a device according to the invention. Such a monitor may be periodically moved to upstream of the conditioning unit, where gas concentrations are much higher, in order to check the efficiency of the conditioning unit, or even to check the operation of the monitor. The device can then be used with partial blocking of the gas diffusion barrier as a dual range monitor.

The skilled reader will readily appreciate that various modifications may be made to the embodiment described above without departing from the scope of the invention.

## Claims

1. A device for determining the concentration of an active gas in a gas mixture, comprising a gas sensor which consumes active gas by reaction at a sensing element and which produces an output signal proportional to the rate of reaction of active gas, said sensor having a gas diffusion barrier means between the gas mixture and the sensing element, and valve means actuatable to close or restrict said gas diffusion barrier means, characterised in that the device comprises means (6) for recording a first output signal from the sensor at a first time subsequent to the closing or restricting of said gas diffusion barrier means, means for recording a second output signal at a time subsequent to said first time, and means (6) for processing said first and second output signals with the time interval between said first and second times, to calculate a value for active gas concentration.

2. A device according to claim 1, characterised in that the gas sensor (4) is a galvanic electrochemical cell.

3. A device according to claim 2, comprising a galvanic electrochemical cell (4) having a sensing electrode and capable of producing an output signal proportional to the rate of reaction of the active gas at the sensing electrode, which cell incorporates at least first gas diffusion barrier means (A) and optionally second gas diffusion barrier means (B) (in which case said first gas diffusion barrier means has a lower resistance to flow of gas to the sensing electrode than said second gas diffusion barrier means), valve means (11, 12) actuatable to close or restrict said first gas diffusion barrier means (A), means (6) for recording a first output signal from the sensor at a first time subsequent to the actuation of the valve means, and for recording a second output at a second time subsequent to said first time, and means (6) for processing the said first and second output signals with the time interval between said first and second times to calculate a value for active gas concentration.

4. A device according to any one of the preceding claims, characterised in that each gas diffusion barrier means (A, B) is a capillary.

5. A device according to claim 4, characterised in that the first gas diffusion barrier (A) has a plurality of capillaries, and a second gas diffusion barrier (B) has a single capillary.

6. A device according to any one of the preceding claims, characterised in that the valve means is a plunger or piston (12) actuated by a piston rod arrangement operated by a solenoid (11).

7. A device according to any one of the preceding claims, wherein the gas sensor is an electrochemical CO sensor.

8. A device according to claim 7, incorporated in an energy efficiency monitor for combustion apparatus.

9. A method for determining the level of an active gas in a gas mixture, comprising the steps of:
   (a) passing the gas over a sensor such as a galvanic electrochemical gas sensor having a sensing element electrode capable of producing an output signal proportional to the rate of reaction of said active gas at said sensing element, said sensor having gas diffusion barrier means, for example first and second gas diffusion barriers, said first gas diffusion barrier having a lower resistance to flow of gas to the sensing electrode than said second gas diffusion barrier,
   (b) closing or restricting said gas diffusion barrier means to prevent or restrict gas flow therethrough,
   (c) recording a first output signal from the sensor at a time subsequent to step (b),
   (d) recording a second output signal from the sensor at a time subsequent to step (c), and
   (e) processing the output signals and the time interval between steps (c) and (d) to calculate a value for the concentration of active gas.

# FIG.1

# FIG.2

FIG.3

FIG. 4

EP 0 663 594 A1

EP 0 663 594 A1

**European Patent Office**

**EUROPEAN SEARCH REPORT**

Application Number

EP 94 30 9323

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>Y<br>A | EP-A-0 274 385 (DRäGERWERK AG )<br><br>* the whole document * | 1-4,6,9<br>7,8<br>5 | G01N33/00 |
| D,Y<br>D,A | US-A-4 829 809 (TANTRAM A D S ET AL)<br><br>* the whole document * | 7,8<br>1-4,9 | |
| D,A | US-A-5 092 980 (MAURER C ET AL)<br>* the whole document * | 1-6,9 | |
| A | TM TECHNISCHES MESSEN, VOL. 58, NO. 2,<br>PAGES 71 - 74, February 1991, MUNICH DE<br>WALTER A et al 'Messkammer zur<br>Untersuchung dynamischer Eigenschaften von<br>Gassensoren'<br>* the whole document * | 1-3,7-9 | |
| | | | TECHNICAL FIELDS SEARCHED (Int.Cl.6)<br><br>G01N |

The present search report has been drawn up for all claims

| Place of search | Date of completion of the search | Examiner |
|---|---|---|
| BERLIN | 10 April 1995 | Johnson, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

8